# EUROPEAN PATENT APPLICATION

(11) **EP 1 986 190 A2**
(43) Date of publication of application: **29.10.2008**
(21) Application number: 08004470.4
(22) Date of filing: 11.03.2008
(51) Int. Cl.: G11B 19/12

(54) **Optical disc reproducing apparatus**

(30) Priority: 26.03.2007 JP 2007078175
(71) Applicant: Funai Electric Co., Ltd., Daito-shi Osaka 574-0013 (JP)
(72) Inventor: Eiza, Tsuyoshi, Daito-shi, Osaka 574-0013 (JP)
(74) Representative: Erny, Tobias

(57) **Abstract**

A digital signal processor (DSP) of a disc player includes a record signal obtaining portion for obtaining an all sum signal that is a total sum of electric signals corresponding to all reflection light obtained by an optical pickup by projecting a laser beam from a laser diode (LD) for Blue-ray disc (BD) to a reproduction data area an optical disc, which stores information to be reproduced, a test signal obtaining portion for obtaining another all sum signal by projecting the laser beam from the LD for BD to a calibration area of the optical disc where a distance from the center position is within the range of 21.3 to 22.0 millimeters, and a discriminating portion for discriminating whether or not the optical disc is a BD based on the all sum signal obtained by the record signal obtaining portion and the another all sum signal obtained by the test signal obtaining portion.

## Description

### BACKGROUND OF THE INVENTION

### Field of the Invention

The present invention relates to an optical disc reproducing apparatus including a light source for Blu-ray disc (BD) that emits a laser beam for reading information stored in a BD, and an optical pickup for converting reflection light from an optical disc including the BD to be read into an electric signal, so that information stored in the optical disc is read and reproduced.

### Description of Related Art

There are provided optical disc reproducing apparatuses that are capable of reproducing a plurality of optical discs types, as the types of the optical discs have been diversified. Such optical disc reproducing apparatuses need to discriminate an optical disc type so that reproduction conditions are set based on a result of the discrimination because the reproduction conditions are different in accordance with the disc types.

For example, JP-A-2006-134367 proposes an optical disc apparatus which decides whether or not the S-shaped curve is detected from an S-shaped curve detection level and a focusing error signal (FE signal) level indicating a shift amount of a focus position of projection light emitted from a light source with respect to a position of a recording surface of the optical disc, and decides that the optical disc is not a BD if the S-shaped curve is not detected.

However, the optical disc apparatus described above may not be capable of deciding correctly whether or not the S-shaped curve is detected because the S-shaped curve detection level and the FE signal level vary depending on detection conditions. As a result, it may be difficult to decide correctly whether or not the optical disc is a BD.

### SUMMARY OF THE INVENTION

It is an object of the present invention to provide an optical disc reproducing apparatus that is capable of discriminating correctly whether or not the optical disc is a BD.

According to one aspect of the present invention, an optical disc reproducing apparatus for reading and reproducing information stored in an optical disc, having a light source for BD for emitting a laser beam for reading information stored in a BD (Blu-ray Disc) and an optical pickup for converting reflection light from an optical disc including the BD from which the information is reproduced into an electric signal, includes a record signal obtaining portion for obtaining first data corresponding to all the reflection light obtained by the optical pickup by projecting the laser beam from the light source for BD to a reproduction data area of the optical disc, the reproduction data area storing information to be reproduced, a test signal obtaining portion for obtaining second data, under an identical condition when the first data is obtained by the record signal obtaining portion, by projecting the laser beam from the light source for BD to a calibration area of the optical disc, the calibration area being a range between 21.3 and 22.0 millimeters distanced from a center position of the optical disc, and a discriminating portion for discriminating whether or not the optical disc is a BD based on the first data obtained by the record signal obtaining portion and the second data obtained by the test signal obtaining portion.

According to this structure, the laser beam from the light source for BD is projected to the reproduction data area of the optical disc which stores information to be reproduced, so that the first data corresponding to all the reflection light obtained by the optical pickup is obtained. In addition, the laser beam from the light source for BD is projected to the calibration area of the optical disc where a distance from the center position is within the range of 21.3 to 22.0 millimeters, so that the second data is obtained. Since it is discriminated whether or not the optical disc is a BD based on the obtained first and second data, it is possible to accurately discriminate whether or not the optical disc is a BD.

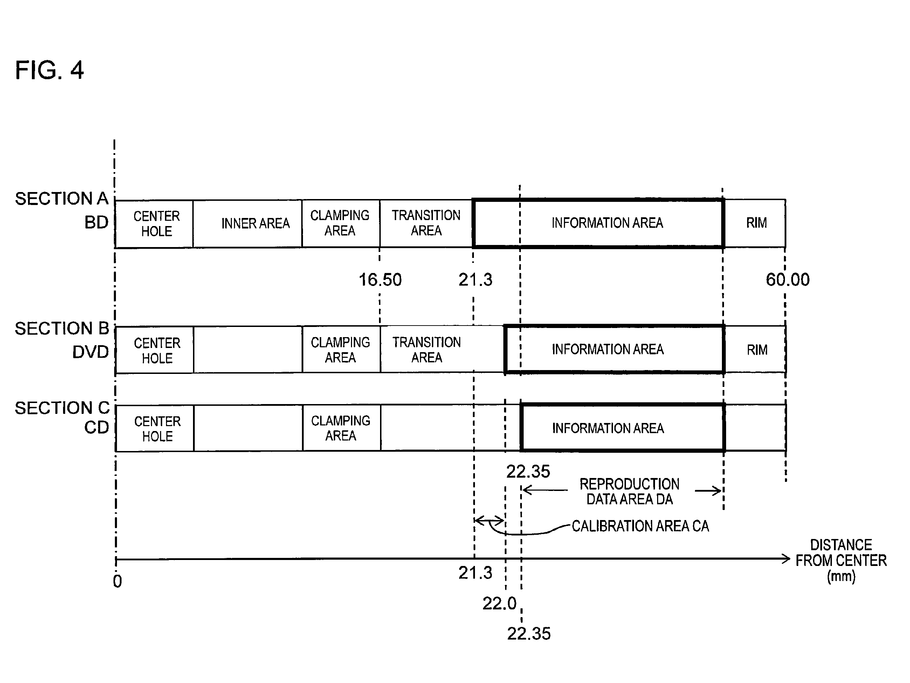

More specifically, the calibration area where a distance from the center position of the optical disc is within the range of 21.3 to 22.0 millimeters is the reproduction data area that stores information to be reproduced (information area) if the optical disc is a BD, whereas it is not the reproduction data area if the optical disc is a compact disc (CD) or a digital versatile disc (DVD) (see Fig. 4). Therefore, when it is discriminated whether or not the optical disc is a BD based on the first data detected in the reproduction data area and the second data detected in the calibration area, it is possible to accurately discriminate whether or not the optical disc is a BD.

As to the optical disc reproducing apparatus having the structure described above, the first data obtained by the record signal obtaining portion is an all sum signal that is a total sum of the electric signals corresponding to all the reflection light obtained by the optical pickup, and the second data obtained by the test signal obtaining portion is another all sum signal that is a total sum of the electric signals corresponding to all the reflection light obtained by the optical pickup.

Alternately, in the optical disc reproducing apparatus having the structure described above, the first data obtained by the record signal obtaining portion is a focusing error signal that indicates a shift amount of a focus position of projection light emitted from the light source with respect to a position of a recording surface of the optical disc, and the second data obtained by the test signal obtaining portion is another focusing error signal that indicates a shift amount of a focus position of projection light emitted from the light source with respect to a position of a recording surface of the optical disc.

According to this structure, the first and second data can be easily obtained. Since it is discriminated whether or not the optical disc is a BD based on the first and second data, it is possible to discriminate accurately whether or not the optical disc is a BD.

According to another aspect of the present invention, in an optical disc reproducing apparatus, the discriminating portion discriminates whether or not the optical disc is a BD based on a quotient obtained by dividing the first data obtained by the record signal obtaining portion by the second data obtained by the test signal obtaining portion.

According to this structure, since it is discriminated that the optical disc is a BD based on a quotient obtained by dividing the first data obtained by the record signal obtaining portion by the second data obtained by the test signal obtaining portion, it is possible to discriminate more accurately whether or not the optical disc is a BD.

According to the optical disc reproducing apparatus having the structure described above, the discriminating portion discriminates that the optical disc is a BD if the quotient is within a range between a predetermined lower limit threshold value and a predetermined upper limit threshold value.

According to this structure, since it is discriminated that the optical disc is a BD if the quotient obtained by dividing the first data obtained by the record signal obtaining portion by the second data obtained by the test signal obtaining portion is within a range between a predetermined lower limit threshold value and a predetermined upper limit threshold value, it is possible to discriminate further accurately whether or not the optical disc is a BD by setting the lower limit threshold value and the upper limit threshold value appropriately.

In the optical disc reproducing apparatus having the structure described above, the first data obtained by the record signal obtaining portion comprises an all sum signal that is a total sum of the electric signals corresponding to all the reflection light obtained by the optical pickup, and a focusing error signal that indicates a shift amount of a focus position of projection light emitted from the light source with respect to a position of a recording surface of the optical disc, the second data obtained by the test signal obtaining portion is another all sum signal that is a total sum of the electric signals corresponding to all the reflection light obtained by the optical pickup, and another focusing error signal that indicates a shift amount of a focus position of projection light emitted from the light source with respect to a position of a recording surface of the optical disc, and the discriminating portion discriminates that the optical disc is a BD if a first quotient obtained by dividing a value of said all sum signal obtained by the record signal obtaining portion by a value of said another all sum signal obtained by the test signal obtaining portion is within a range between a predetermined first lower limit threshold value and a predetermined first upper limit threshold value and if a second quotient obtained by dividing a value of said focusing error signal obtained by the record signal obtaining portion by a value of said another focusing error signal obtained by the test signal obtaining portion is within a range between a predetermined second lower limit threshold value and a predetermined second upper limit threshold value.

According to this structure, since it is discriminated that the optical disc is a BD based on two conditions, i.e., the quotient obtained from two all sum signals and the quotient obtained from two focusing error signals, it is possible to discriminate further accurately whether or not the optical disc is a BD.

### BRIEF DESCRIPTION OF THE DRAWINGS

Fig. 1 is a structural diagram showing an example of a disc player according to the present invention.

Fig. 2 is a functional structural diagram showing an example of a structure of a main part of the disc player according to the present invention.

Figs. 3A is a graph showing an example of a focusing error signal FE.

Figs. 3B is a graph showing an example of an all sum signal AS.

Fig. 4 is a diagram showing areas that are formed in various types of optical discs.

Fig. 5 is a flowchart showing an example of an operation of the disc player according to the present invention.

### DETAILED DESCRIPTION OF PREFERRED EMBODIMENTS

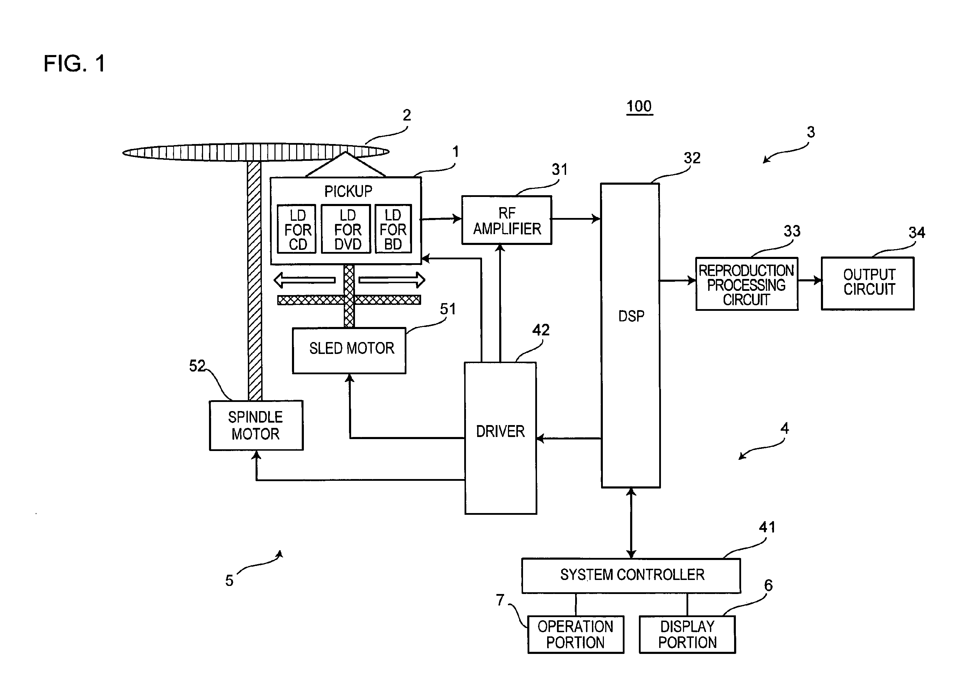

Hereinafter, an embodiment of the present invention will be described with reference to the attached drawings. Fig. 1 is a structural diagram showing an example of a disc player according to the present invention. A disc player 100 (corresponding to the optical disc reproducing apparatus) includes an optical pickup 1, an output device 3, a control device 4, a driving device 5, a display portion 6, and an operation portion 7 according to the present invention.

The optical pickup 1 is provided with a laser diode (LD) for CD, an LD for DVD, and an LD for BD, and it converts reflection light from an optical disc 2 (a CD, a DVD, or a BD) to be read into an electric signal so as to reproduce various information such as audio information and image information stored in the optical disc 2 (a CD, a DVD, or a BD). The LD for CD emits a laser beam for reading information stored in a CD. The LD for DVD emits a laser beam for reading information stored in a DVD. The LD for BD emits a laser beam for reading information stored in a BD.

In addition, the optical pickup 1 (corresponding to a part of the record signal obtaining portion and a part of the test signal obtaining portion) has a structure for being moved by a sled motor 51 in the radial direction of the optical disc 2 and the direction perpendicular to the surface thereof (approaching and retreating directions). Further, the optical pickup 1 is moved in the radial direction of the optical disc 2 and the direction perpendicular to the surface thereof by the sled motor 51 in accordance with an instruction from a DSP (a digital signal processor) 32 while it delivers a focusing error signal, an all sum signal, and the like to the DSP 32 via an RF amplifier 31 that will be described later.

The output device 3 converts the information such as audio information and image information from the optical pickup 1 into sounds and images which are delivered respectively to a speaker and a monitor (not shown). The output device 3 includes the RF amplifier 31, the DSP 32, a reproduction processing circuit 33, and an output circuit 34.

The RF amplifier 31 (corresponding to a part of the record signal obtaining portion and a part of the test signal obtaining portion) is an amplifier for amplifying signals corresponding to the audio information, the image information, and the like from the optical pickup 1. The RF amplifier 31 delivers to the DSP 32 the focusing error signal (FE signal) indicating a shift amount of a focus position of projection light emitted from the LD for CD, the LD for DVD, or the LD for BD with respect to a position of a recording surface of the optical disc (a CD, a DVD, or a BD) to be read, the all sum signal (AS signal) that represents a total sum of the electric signals corresponding to all the reflection light obtained by the optical pickup 1 and the like.

The DSP 32 and the reproduction processing circuit 33 perform various information processing (e.g., an image processing and the like) for reproduction on the signal from the RF amplifier 31. The output circuit 34 performs a DA conversion processing and the like for delivering information from the reproduction processing circuit 33 to the speaker and the monitor (not shown).

The control device 4 controls actions of the optical pickup 1 and the driving device 5 based on an instruction operation that is accepted via the operation portion 7. The control device 4 includes a system controller 41 and a driver 42. The system controller 41 accepts information from the operation portion 7 and transmits the same to the DSP 32 while it transmits information from the DSP 32 to the display portion 6. The driver 42 (corresponding to a part of the record signal obtaining portion and a part of the test signal obtaining portion) controls actions of the optical pickup 1 and the driving device 5 based on an instruction from the DSP 32.

The driving device 5 includes the sled motor 51 and a spindle motor 52. The sled motor 51 (corresponding to a part of the record signal obtaining portion and a part of the test signal obtaining portion) moves the optical pickup 1 in the radial direction of the optical disc 2 and in the direction perpendicular to the same based on an instruction from the driver 42. The spindle motor 52 drives the optical disc 2 to rotate based on an instruction from the driver 42.

The display portion 6 includes a liquid crystal display (LCD) or the like for displaying information from the DSP 32 so that it can be viewed externally. The operation portion 7 includes various operational buttons and the like so as to accept an instruction from a user and deliver a corresponding operational signal to the DSP 32.

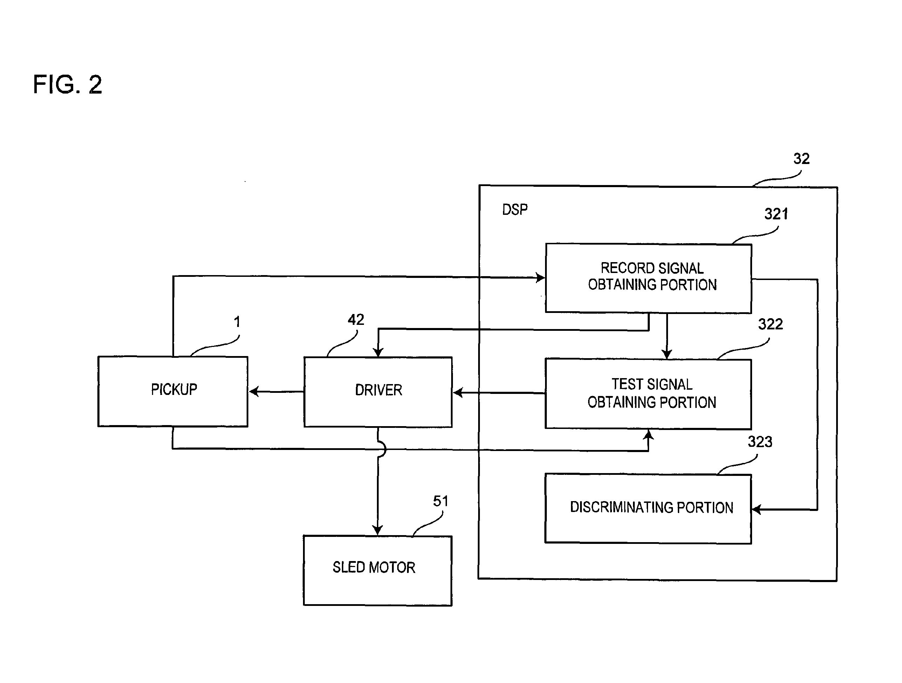

Fig. 2 is a functional structural diagram showing an example of a structure of a main part of the disc player 100 according to the present invention. The DSP 32 includes functional portions, which are a record signal obtaining portion 321, a test signal obtaining portion 322, and a discriminating portion 323. Here, the DSP 32 reads out and executes a program stored in a ROM or the like (not shown) so as to function as the record signal obtaining portion 321, the test signal obtaining portion 322, the discriminating portion 323, and other functional portions.

In addition, among various data stored in the ROM or the like (not shown), data that can be stored in a removable recording medium may be read via a driver for a hard disk drive, an optical disc drive, a flexible disc drive, a silicon disc drive, a cassette media reader, and the like, for example. In this case, the recording medium may be, for example, a hard disk, an optical disc, a flexible disc, a CD, a DVD, a semiconductor memory, and the like.

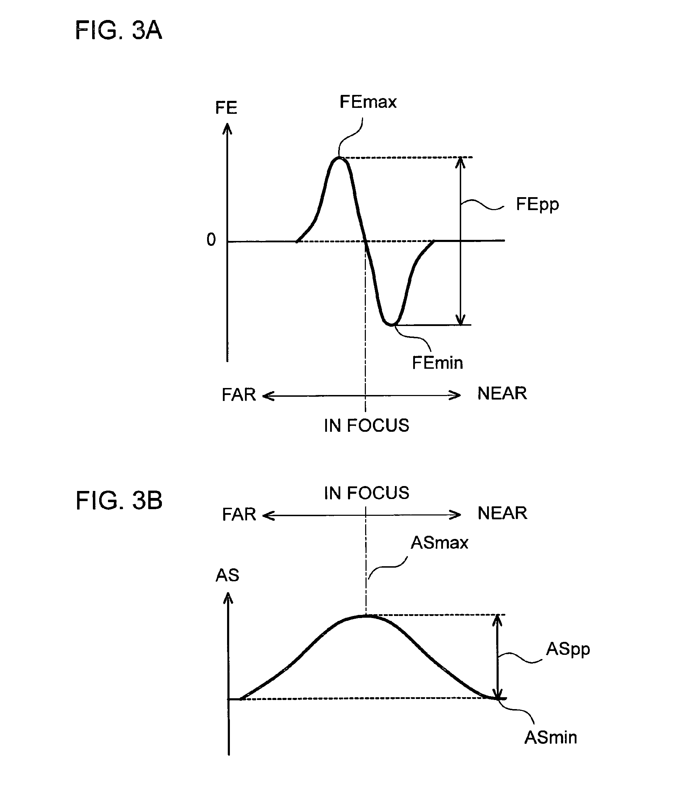

The record signal obtaining portion 321 (corresponding to a part of the record signal obtaining portion) is a functional portion for obtaining an all sum signal AS 1 that is a total sum of electric signals corresponding to all the reflection light obtained by the optical pickup 1 (an amplitude value ASpp of the all sum signal AS), and a focusing error signal FE1 indicating a shift amount of a focus position of the projection light emitted from the light source with respect to a position of the recording surface of the optical disc 2 (an amplitude value FEpp of the focusing error signal FE) by projecting a laser beam from the LD for BD of the optical pickup 1 to the optical disc 2 to a reproduction data area DA in which information to be reproduced is stored (see Figs. 3A and 3B).

The test signal obtaining portion 322 (corresponding to a part of the test signal obtaining portion) is a functional portion for obtaining an all sum signal AS2 (the amplitude value ASpp of the all sum signal AS) and a focusing error signal FE2 (the amplitude value FEpp of the focusing error signal FE) by projecting a laser beam from the LD for BD of the optical pickup 1 to the optical disc 2 at a calibration area CA that is an area between 21.3 and 22.0 millimeters from the center position of the optical disc 2 (see Figs. 3A and 3B).

Here, the focusing error signal FE and the all sum signal AS will be described with reference to Figs. 3A and 3B. Figs. 3A and 3B are graphs showing examples of the focusing error signal FE and the all sum signal AS, respectively. The horizontal axes in Figs. 3A and 3B indicate time, the vertical axis in Fig. 3A indicates the focusing error signal FE, and the vertical axis in Fig. 3B indicates the all sum signal AS.

As shown in Fig. 3A, when the optical pickup 1 (here, the LD for BD) is moved close to the optical disc 2 by the sled motor 51, the focusing error signal FE increases. The focusing error signal FE becomes a maximum value FEmax at a predetermined position, and after that it becomes zero at the focus position. When the optical pickup 1 (here, the LD for BD) further approaches the optical disc 2, the focusing error signal FE becomes a minimum value FEmin at a predetermined position and then the focusing error signal FE increases. A difference between the maximum value FEmax and the minimum value FEmin is the amplitude value FEpp of the focusing error signal FE.

As shown in Fig. 3B, when the optical pickup 1 (here, the LD for BD) is moved close to the optical disc by the sled motor 51, the all sum signal AS increases. The all sum signal AS becomes a maximum value ASmax at the focus position, and after that the all sum signal AS decreases to be a minimum value ASmin. A difference between the maximum value ASmax and the minimum value ASmin is an amplitude value ASpp of the all sum signal AS.

Next, the reproduction data area DA and the calibration area CA of the optical disc 2 will be described with reference to Fig. 4. Fig. 4 is a diagram showing areas that are formed in various types of optical discs 2, in which the horizontal axis indicates a distance from the center position of the optical disc 2. Section (A) in Fig. 4 shows areas formed in a BD, section (B) in Fig. 4 shows areas formed in a DVD, and section (C) in Fig. 4 shows areas formed in a CD.

As shown in the section (A) in Fig. 4, a BD has an area (transition area) for storing information for identifying a manufacturer or the like in the area where a distance from the center position is 16.50 to 21.3 millimeters and an area (information area) for storing information to be reproduced in the area where a distance from the center position is 21.3 millimeters and larger. As shown in the section (B) in Fig. 4, a DVD has a reproduction data area (information zone) for storing information to be reproduced in an area where a distance from the center position is 22.0 millimeters and larger. As shown in the section (C) in Fig. 4, a CD has a reproduction data area (information zone) for storing information to be reproduced in an area where a distance from the center position is 22.35 millimeters and larger.

In other words, the area from which the record signal obtaining portion 321 obtains the all sum signal AS1 and the focusing error signal FE1 (the reproduction data area DA where a distance from the center position is 22.35 millimeters and larger) stores information to be reproduced in every type of the optical disc 2 (here, a BD, a DVD, and a CD). On the other hand, the area from which the test signal obtaining portion 322 obtains the all sum signal AS2 and the focusing error signal FE2 (the calibration area CA where a distance from the center position is 21.3 to 22.0 millimeters) stores information to be reproduced in a BD while it stores information other than the information to be reproduced in the other types of the optical disc 2 (here, a DVD or a CD).

Therefore, if the optical disc 2 is a BD, the calibration area CA also includes information to be reproduced as in the reproduction data area DA. Consequently, the amplitude value AS1 of the all sum signal obtained by the record signal obtaining portion 321 becomes substantially identical to the amplitude value AS2 of the all sum signal obtained by the test signal obtaining portion 322, and the amplitude value FE1 of the focusing error signal obtained by the record signal obtaining portion 321 becomes substantially identical to the amplitude value FE2 of the focusing error signal obtained by the test signal obtaining portion 322.

With reference to Fig. 2 again, a functional structure of the DSP 32 will be described. The discriminating portion 323 is a functional portion for discriminating whether or not the optical disc 2 is a BD based on the all sum signal AS1 and the focusing error signal FE1 obtained by the record signal obtaining portion 321 as well as the all sum signal AS2 and the focusing error signal FE2 obtained by the test signal obtaining portion 322.

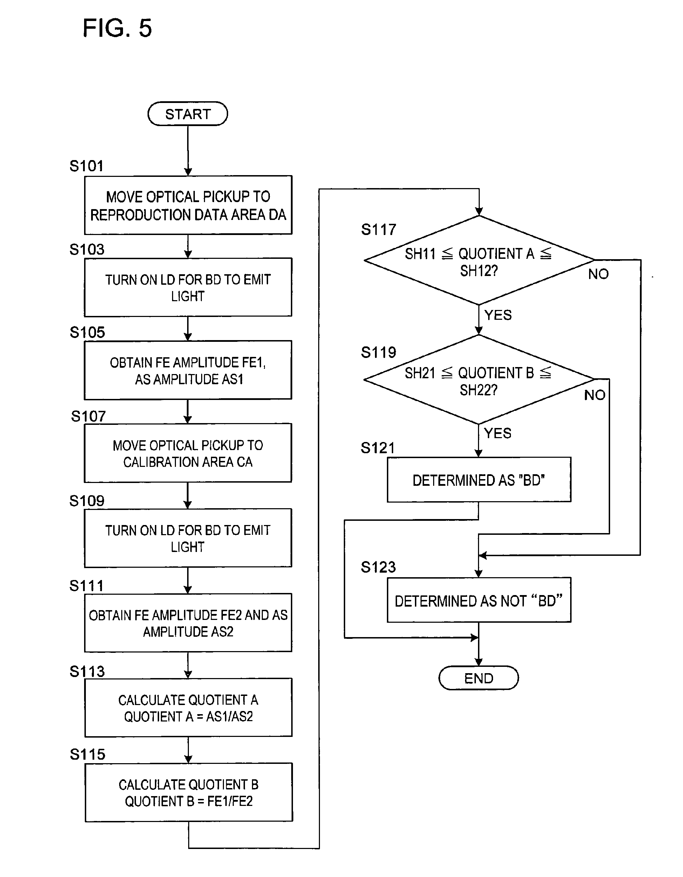

More specifically, the discriminating portion 323 discriminates that the optical disc 2 is a BD if a quotient α obtained by dividing a value of the all sum signal AS1 that the record signal obtaining portion 321 obtains by a value of the all sum signal AS2 that the test signal obtaining portion 322 obtains is within a range between a predetermined lower limit threshold value SH11 (e.g., 0.8) and a predetermined upper limit threshold value SH12 (e.g., 1.2) and if a quotient β obtained by dividing a value of the focusing error signal FE1 that the record signal obtaining portion 321 obtains by a value of the focusing error signal FE2 that the test signal obtaining portion 322 obtains is within a range between a predetermined lower limit threshold value SH21 (e.g., 0.8) and a predetermined upper limit threshold value (e.g., 1.2) (see a flowchart shown in Fig. 5).

Fig. 5 is a flowchart showing an example of an operation of the disc player 100 according to the present invention. First, the record signal obtaining portion 321 makes the optical pickup 1 move via the sled motor 51 to the reproduction data area DA of the optical disc 2 in which information to be reproduced is stored (e.g., a position where a distance from the center position is 30 millimeters) (S101). Then, the record signal obtaining portion 321 makes the LD for BD of the optical pickup 1 emit light (S103). Next, the record signal obtaining portion 321 obtains the all sum signal AS1 and the focusing error signal FE1 (S105).

Next, the test signal obtaining portion 322 makes the optical pickup 1 move via the sled motor 51 to the calibration area CA where a distance from the center position of the optical disc 2 is within the range of 21.3 to 22.0 millimeters (e.g., a position where a distance from the center position is 21.7 millimeters) (S107). Then, the test signal obtaining portion 322 makes the LD for BD of the optical pickup 1 emit light (S109). Next, the test signal obtaining portion 322 obtains the all sum signal AS2 and the focusing error signal FE2 (S111).

Next, the discriminating portion 323 obtains the quotient α by dividing the value of the all sum signal AS 1 obtained in the step S105 by the value of the all sum signal AS2 obtained in the step S111 (S113). Then, the discriminating portion 323 obtains the quotient β by dividing the value of the focusing error signal FE1 obtained in the step S105 by the value of the focusing error signal FE2 obtained in the step S111 (S115).

Next, the discriminating portion 323 decides whether or not the quotient α obtained in the step S113 is within the range between the lower limit threshold value SH11 and the upper limit threshold value SH12 (S117). If it is decided that the quotient α is not within the range between the lower limit threshold value SH11 and the upper limit threshold value SH12 (NO in S117), the discriminating portion 323 decides that the optical disc 2 is not a BD (S123), and then the process ends. If it is decided that the quotient α is within the range between the lower limit threshold value SH11 and the upper limit threshold value SH12 (YES in S117), the discriminating portion 323 decides whether or not the quotient β obtained in the step S 115 is within the range between the lower limit threshold value SH21 and the upper limit threshold value SH22 (S 119).

If it is decided that the quotient β is not within the range between lower limit threshold value SH21 and the upper limit threshold value SH22 (NO in S119), the discriminating portion 323 decides that the optical disc 2 is not a BD (S123), and then the process ends. If it is decided that the quotient β is within the range between the lower limit threshold value SH21 and the upper limit threshold value SH22 (YES in S 119), the discriminating portion 323 decides that the optical disc 2 is a BD (S121), and then the process ends.

In this way, the laser beam emitted from the LD for BD of the optical pickup 1 is projected to the optical disc 2 at the reproduction data area DA storing information to be reproduced, so as to obtain the all sum signal AS 1 that is a total sum of the electric signals corresponding to all the reflection light obtained from the optical pickup 1. In addition, the laser beam emitted from the LD for BD is projected to the optical disc 2 at the calibration area CA where a distance from the center position is within the range of 21.3 to 22.0 millimeters, and the all sum signal AS2 is obtained. Since it is decided whether or not the optical disc 2 is a BD based on the two obtained all sum signals AS 1 and AS2, it is possible to accurately discriminate whether or not the optical disc 2 is a BD.

More specifically, the calibration area CA where a distance from the center position of the optical disc 2 is within the range of 21.3 to 22.0 millimeters is the reproduction data area that stores information to be reproduced (information area) if the optical disc 2 is a BD, whereas it is not the reproduction data area if the optical disc 2 is a CD or a DVD (see Fig. 4). Therefore, when it is discriminated whether or not the optical disc 2 is a BD based on the all sum signal AS 1 detected in the reproduction data area DA and the all sum signal AS2 detected in the calibration area CA, it is possible to accurately discriminate whether or not the optical disc 2 is a BD.

In addition, the laser beam emitted from the LD for BD of the optical pickup 1 is projected to the optical disc 2 at the reproduction data area DA storing the information to be reproduced, so as to obtain the focusing error signal FE1 indicating the shift amount of the focus position of the projection light emitted from the light source with respect to the position of the recording surface of the optical disc 2. In addition, the laser beam emitted from the LD for BD is projected to the optical disc 2 at the calibration area CA where a distance from the center position is within the range of 21.3 to 22.0 millimeters, so that the focusing error signal FE2 is obtained. Since it is decided whether or not the optical disc 2 is a BD based on the two obtained focusing error signals FE1 and FE2, it is possible to accurately discriminate whether or not the optical disc 2 is a BD.

More specifically, the calibration area CA where a distance from the center position of the optical disc 2 is within the range of 21.3 to 22.0 millimeters corresponds to the reproduction data area that stores information to be reproduced (information area) if the optical disc 2 is a BD, whereas it is not the reproduction data area if the optical disc 2 is a CD or a DVD (see Fig. 4). Therefore, when it is discriminated whether or not the optical disc is a BD based on the focusing error signal FE1 detected in the reproduction data area DA and the focusing error signal FE2 detected in the calibration area CA, it is possible to accurately discriminate whether or not the optical disc is a BD.

Further, if the quotient α obtained by dividing a value of the all sum signal AS detected in the reproduction data area DA by a value of the all sum signal AS2 detected in the calibration area CA is within a range between a predetermined lower limit threshold value SH11 (e.g., 0.8) and a predetermined upper limit threshold value SH12 (e.g., 1.2) and if the quotient β obtained by dividing a value of the focusing error signal FE1 detected in the reproduction data area DA by a value of the focusing error signal FE2 detected in the calibration area CA is within a range between a predetermined lower limit threshold value SH21 (e.g., 0.8) and a predetermined upper limit threshold value (e.g., 1.2), it is decided that the optical disc 2 is a BD. Therefore, it is possible to more accurately discriminate whether or not the optical disc 2 is a BD by setting the lower limit threshold values SH11 and SH21 and the upper limit threshold values SH12 and SH22 appropriately.

Note that the present invention is also applicable to other embodiments described below. (A) Although the optical pickup 1 has three light sources (LD for CD, LD for DVD, and LD for BD) in the embodiment described above, the optical pickup 1 may have two light sources. For example, the optical pickup 1 may have the LD for DVD and the LD for BD.

(B) Although the DSP 32 works as the record signal obtaining portion 321, the test signal obtaining portion 322, and the discriminating portion 323 in the embodiment described above, it is possible to adopt another structure in which at least one functional portion is realized by hardware in a form of a circuit.

(C) Although it is described in the embodiment that the discriminating portion 323 discriminates whether or not the optical disc 2 is a BD based on the all sum signals AS 1 and AS2, and the focusing error signals FE1 and FE2, it is also possible that the discriminating portion 323 discriminates whether or not the optical disc 2 is a BD based on a set of the all sum signals AS1 and AS2 or a set of the focusing error signals FE1 and FE2. In this case, the process can be simplified.

(D) Although the discriminating portion 323 discriminates whether or not the optical disc 2 is a BD based on amplitude values of the all sum signals AS 1 and AS2 (ASpp shown in Fig. 3B) and amplitude values of the focusing error signals FE1 and FE2 (FEpp shown in Fig. 3A) in the embodiment described above, the discriminating portion 323 may discriminate whether or not the optical disc 2 is a BD based on maximum values of the all sum signals AS1 and AS2 (ASmax shown in Fig. 3B) and maximum values of the focusing error signals FE1 and FE2 (FEmax shown in Fig. 3A). In addition, the discriminating portion 323 may discriminate whether or not the optical disc 2 is a BD based on minimum values of the focusing error signals FE1 and FE2 (FEmin shown in Fig. 3A). In this case, the process can be simplified.

## Claims

**1.** An optical disc reproducing apparatus for reading and reproducing information stored in an optical disc, the optical disc reproducing apparatus including a light source for BD for emitting a laser beam for reading information stored in a BD (Blu-ray Disc) and an optical pickup for converting reflection light from an optical disc including the BD from which the information is reproduced into an electric signal,
**characterized in that**
said optical disc reproducing apparatus comprises:
a record signal obtaining portion for obtaining first data corresponding to all the reflection light obtained by the optical pickup by projecting the laser beam from the light source for BD to a reproduction data area of the optical disc, the reproduction data area storing information to be reproduced;
a test signal obtaining portion for obtaining second data, under an identical condition when the first data is obtained by the record signal obtaining portion, by projecting the laser beam from the light source for BD to a calibration area of the optical disc, the calibration area being a range between 21.3 and 22.0 millimeters distanced from a center position of the optical disc; and
a discriminating portion for discriminating whether or not the optical disc is a BD based on the first data obtained by the record signal obtaining portion and the second data obtained by the test signal obtaining portion.

**2.** The optical disc reproducing apparatus according to claim 1,
wherein the first data obtained by the record signal obtaining portion is an all sum signal that is a total sum of the electric signals corresponding to all the reflection light obtained by the optical pickup, and
the second data obtained by the test signal obtaining portion is another all sum signal that is a total sum of the electric signals corresponding to all the reflection light obtained by the optical pickup.
wherein the first data obtained by the record signal obtaining portion is a focusing error signal that indicates a shift amount of a focus position of projection light emitted from the light source with respect to a position of a recording surface of the optical disc, and
the second data obtained by the test signal obtaining portion is another focusing error signal that indicates a shift amount of a focus position of projection light emitted from the light source with respect to a position of a recording surface of the optical disc.

**4.** The optical disc reproducing apparatus according to any one of claims 1 to 3,
wherein the discriminating portion discriminates whether or not the optical disc is a BD based on a quotient obtained by dividing the first data obtained by the record signal obtaining portion by the second data obtained by the test signal obtaining portion.

**5.** The optical disc reproducing apparatus according to claim 4,
wherein the discriminating portion discriminates that the optical disc is a BD if the quotient is within a range between a predetermined lower limit threshold value and a predetermined upper limit threshold value.

**6.** The optical disc reproducing apparatus according to claim 1,
wherein the first data obtained by the record signal obtaining portion comprises an all sum signal that is a total sum of the electric signals corresponding to all the reflection light obtained by the optical pickup, and a focusing error signal that indicates a shift amount of a focus position of projection light emitted from the light source with respect to a position of a recording surface of the optical disc,
the second data obtained by the test signal obtaining portion is another all sum signal that is a total sum of the electric signals corresponding to all the reflection light obtained by the optical pickup, and another focusing error signal that indicates a shift amount of a focus position of projection light emitted from the light source with respect to a position of a recording surface of the optical disc, and
the discriminating portion discriminates that the optical disc is a BD if a first quotient obtained by dividing a value of said all sum signal obtained by the record signal obtaining portion by a value of said another all sum signal obtained by the test signal obtaining portion is within a range between a predetermined first lower limit threshold value and a predetermined first upper limit threshold value and if a second quotient obtained by dividing a value of said focusing error signal obtained by the record signal obtaining portion by a value of said another focusing error signal obtained by the test signal obtaining portion is within a range between a predetermined second lower limit threshold value and a predetermined second upper limit threshold value.
